# EUROPEAN PATENT APPLICATION

(11) **EP 4 773 487 A1**
(43) Date of publication of application: **08.07.2026**
(21) Application number: 24858137.3
(22) Date of filing: 19.07.2024
(51) Int. Cl.: H02K 33/18, H02K 33/02, H02K 41/03, B60G 17/015, B60G 17/06

(54) **MOTOR, ACTIVE SUSPENSION AND VEHICLE**

(30) Priority: 28.08.2023 CN 202311096810
(71) Applicant: BYD Company Limited, Shenzhen, Guangdong 518118 (CN)
(72) Inventor: ZHANG, Bin, Shenzhen, Guangdong 518118 (CN); JIN, Haoning, Shenzhen, Guangdong 518118 (CN); TIAN, Shunjie, Shenzhen, Guangdong 518118 (CN); GUO, Jiaxiong, Shenzhen, Guangdong 518118 (CN); MIN, Guangyan, Shenzhen, Guangdong 518118 (CN)
(74) Representative: Mathys & Squire
(86) International application number: PCT/CN2024/106541
(87) International publication number: WO 2025/044593

(57) **Abstract**

A motor, an active suspension and a vehicle, the motor comprising a primary structure and a secondary structure. The primary structure comprises at least one fixing surface and coils. The fixing surface is provided with a plurality of first protruding portions, the first protruding portions protruding out of the fixing surface, and the plurality of first protruding portions being arranged at intervals in a first direction. The coils are arranged to surround the first protruding portions, the surrounding center line of each coil being perpendicular to the fixing surface, and the first direction being not parallel to the surrounding center line. The secondary structure is spaced apart from the primary structure, and the secondary structure is arranged opposite to the coils.

## Description

### CROSS-REFERENCE TO RELATED APPLICATIONS

The present disclosure claims priority to Chinese Patent Application No. 202311096810.7 filed on August 28, 2023, entitled "MOTOR, ACTIVE SUSPENSION, AND VEHICLE", which is incorporated herein by reference in its entirety.

### FIELD

The present disclosure relates to the field of vehicle technologies, and in particular, to a motor, an active suspension, and a vehicle.

### BACKGROUND

Existing linear motors generate output power by utilizing the relative movement between a single-sided mover slider and a stator with a single-sided attached permanent magnet. However, the power density of existing linear motors is relatively low, which fails to improve efficiency effectively.

### SUMMARY

A series of concepts in a simplified form are introduced in the content of the disclosure section, which will be further described in detail in the specific implementation modes section. The content of the disclosure section of the present disclosure is not intended to define the key features and essential technical features of the claimed technical solution, nor is it intended to determine the protection scope of the claimed technical solution.

According to a first aspect of the present disclosure, a motor is provided, wherein the motor includes:

A primary structure, wherein the primary structure includes:

At least one fixing surface, wherein the fixing surface is arranged with a plurality of first protruding portions, the first protruding portions protruding from the fixing surface, and the plurality of first protruding portions being spaced apart along a first direction; and
a coil, wherein the coil is arranged around the first protruding portion, a surrounding center line of the coil being perpendicular to the fixing surface, and the first direction being not parallel to the surrounding center line; and
a secondary structure, wherein the secondary structure is spaced apart from the primary structure, and the secondary structure being arranged opposite to the coils.

In an embodiment, a first groove is formed between adjacent first protruding portions, the coil includes a first line segment and a second line segment connected to the first line segment, two first line segments are spaced apart along the first direction, one of the two first line segments is located in one first groove, the other of the two first line segments is located in the other first groove, a length direction of the first line segment is perpendicular to the first direction, the second line segment is located between the two first line segments along the first direction, and the first protruding portion is located between the two second line segments along the length direction.

In an embodiment, the primary structure further includes a magnetic member, the first protruding portion being arranged with an additional slot, and the magnetic member being arranged in the additional slot.

In an embodiment, the primary structure includes a plurality of fixing surfaces, and the plurality of fixing surfaces are arranged along a circumferential direction; and in the circumferential direction, the first protruding portions of adjacent fixing surfaces are spaced apart to form a gap.

In an embodiment, at least three-phase windings are formed on the same fixing surface, and each phase winding includes one coil or each phase winding includes a plurality of coils connected in series; and/or,
the primary structure includes a plurality of fixing surfaces, and the coils on different fixing surfaces are not electrically connected to each other.

In an embodiment, the secondary structure includes a plurality of second protruding portions, the plurality of second protruding portions being spaced apart along the first direction, a second groove being formed between adjacent second protruding portions, and an opening direction of the second groove facing the primary structure.

In an embodiment, the coil is at least partially arranged opposite to the second groove.

In an embodiment, the size of the primary structure along the first direction is greater than or equal to the size of the secondary structure along the first direction.

In an embodiment, the primary structure includes a plurality of fixing surfaces, and the plurality of fixing surfaces are arranged along a circumferential direction; the motor further includes a support member, and the support member includes a main body, the main body including a plurality of inner surfaces, the inner surfaces being arranged opposite to the fixing surfaces in a one-to-one manner, and the inner surfaces being connected to the secondary structure.

In an embodiment, the support member further includes a guide portion connected to the main body, and the primary structure includes a guide hole, an axial direction of the guide hole is parallel to the first direction, and the guide portion is inserted into the guide hole.

In an embodiment, the motor further includes a displacement sensor, and a corner of the main body is arranged with a notch, the notch extending through two adjacent inner surfaces, and the displacement sensor being arranged in the notch.

The present disclosure further provides an active suspension, wherein the active suspension includes the foregoing motor.

In an embodiment, the active suspension further includes an elastic member, and the elastic member can generate elastic deformation along the first direction, the elastic member including a first end and a second end which are arranged opposite to each other along the first direction, the first end of the elastic member acting on the secondary structure, and the second end of the elastic member acting on the primary structure.

In an embodiment, the motor further includes a support member, and the support member includes a main body, the main body including an inner surface, the inner surface facing the primary structure and being connected to the secondary structure, and the first end of the elastic member abutting against the support member, so that the first end of the elastic member acts on the secondary structure through the support member.

In an embodiment, the support member further includes a support plate, the main body further includes an outer surface, the support plate is connected to the outer surface and arranged around the main body, and the first end of the elastic member abuts against the support plate.

In an embodiment, the active suspension further includes a connecting member, the connecting member being fixedly connected to the primary structure, and the second end of the elastic member abuts against the connecting member, so that the second end of the elastic member acts on the primary structure through the connecting member.

In an embodiment, the connecting member includes an abutment plate and a matching portion, the matching portion protruding from the abutment plate toward the primary structure along the first direction, and the second end of the elastic member abutting against the abutment plate.

In an embodiment, the primary structure further includes a guide hole, and the matching portion is inserted into the guide hole along the first direction and is fixedly connected to the guide hole.

In an embodiment, the support member further includes a guide portion, the matching portion including a matching hole, the axial direction of the matching hole being parallel to the axial direction of the guide hole, and wherein the guide portion is inserted into the matching hole and can move relative to the matching hole along the first direction.

The present disclosure further provides a vehicle, wherein the vehicle includes the foregoing motor.

The present disclosure further provides a vehicle, wherein the vehicle includes the foregoing active suspension, a vehicle body, and wheels, the vehicle body being connected to a top of the primary structure, the wheels being connected to a bottom of the secondary structure, the top of the primary structure and the bottom of the secondary structure being respectively located at two ends of the motor along a height direction of the vehicle, and the height direction is parallel to the first direction.

### BRIEF DESCRIPTION OF THE DRAWINGS

The following drawings of the present disclosure are incorporated herein as a part of the present disclosure for understanding the present disclosure. The drawings show the implementation modes of the present disclosure and their descriptions, which are used to explain the device and principle of the present disclosure. In the drawings:
FIG. 1 is a cross-sectional schematic view of an active suspension according to a preferred implementation mode of the present disclosure;
FIG. 2 is another cross-sectional schematic view of the active suspension according to the preferred implementation mode of the present disclosure;
FIG. 3 is a three-dimensional schematic view of the primary structure shown in FIG. 1;
FIG. 4 is a three-dimensional schematic view of the support member shown in FIG. 1;
FIG. 5 is another three-dimensional schematic view of the support member shown in FIG. 1, where the secondary structure is located in the support member;
FIG. 6 is a three-dimensional schematic view of the primary structure and the secondary structure shown in FIG. 1, where the secondary structure and the primary structure are arranged opposite to each other;
FIG. 7 is a simplified layout diagram of the coil shown in FIG. 3;
FIG. 8 is another simplified layout diagram of the coil shown in FIG. 7;
FIG. 9 is a three-dimensional schematic view of the main body of the primary structure shown in FIG. 1;
FIG. 10 is a cross-sectional schematic view of the active suspension shown in FIG. 1; and
FIG. 11 is a partial schematic view of a vehicle according to a preferred implementation mode of the present disclosure.

**Description of reference signs:**

| | | | |
|---|---|---|---|
| 10: | motor | 100: | active suspension |
| 110: | primary structure | 111: | first groove |
| 112: | coil | 113: | first protruding portion |
| 114: | fixing surface | 115: | corner of the coil |
| 116: | additional slot | 117: | magnetic member |
| 118: | guide hole | 119: | wire |
| 120: | three-phase winding | 121: | multi-phase winding |
| 122: | first side surface | 123: | second side surface |
| 124: | first line segment | 125: | second line segment |
| 126: | gap | 127: | chamber |
| 130: | secondary structure | 131: | second groove |
| 132: | second protruding portion | 150: | elastic member |
| 151: | first end of the elastic member | 152: | second end of the elastic member |
| 160: | support member | 161: | main body |
| 162: | support plate | 163: | guide portion |
| 164: | main body hole | 165: | corner of the main body |
| 166: | displacement sensor | 167: | notch |
| 168: | ring portion | 169: | inner surface of the main body |
| 170: | outer surface of the main body | 180: | connecting member |
| 181: | abutment plate | 182: | matching portion |
| 183: | matching hole | 200: | vehicle |
| 210: | vehicle body | 220: | wheel |

### DETAILED DESCRIPTION

In the following description, numerous specific details are set forth to provide a more thorough understanding of the present disclosure. However, it will be apparent to those skilled in the art that the present disclosure may be practiced without one or more of these specific details. In other embodiments, some technical features well-known in the art are not described to avoid confusion with the present disclosure.

For a thorough understanding of the present disclosure, detailed structures will be presented in the following description to explain the present disclosure. Obviously, the implementation of the present disclosure is not limited to the specific details familiar to those skilled in the art. Preferred embodiments of the present disclosure are described in detail below; however, in addition to these detailed descriptions, the present disclosure may further have other embodiments and should not be construed as being limited to the embodiments set forth herein.

It will be understood that the terms used herein are only for the purpose of describing specific embodiments and are not intended to limit the present disclosure. The singular forms "a", "an" and "the" are further intended to include the plural forms unless the context clearly indicates otherwise. When the terms "comprise" and/or "include" are used in this specification, they specify the presence of the stated features, integers, steps, operations, elements, and/or components, but do not exclude the presence or addition of one or more other features, integers, steps, operations, elements, components, and/or combinations thereof. The terms "upper", "lower", "front", "rear", "left", "right" and similar expressions used in the present disclosure are for illustrative purposes only and are not limiting.

The ordinal numbers such as "first" and "second" cited in the present disclosure are merely identifiers and do not have any other meanings, such as a specific order. Moreover, for example, the term "first component" does not imply the existence of a "second component" by itself, and the term "second component" does not imply the existence of a "first component" by itself.

Hereinafter, specific embodiments of the present disclosure will be described in more detail with reference to the accompanying drawings, which show representative embodiments of the present disclosure and are not intended to limit the present disclosure.

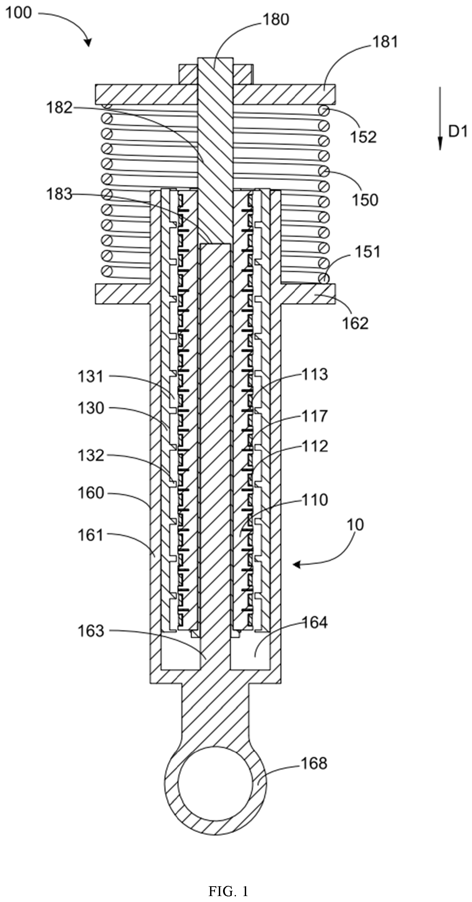

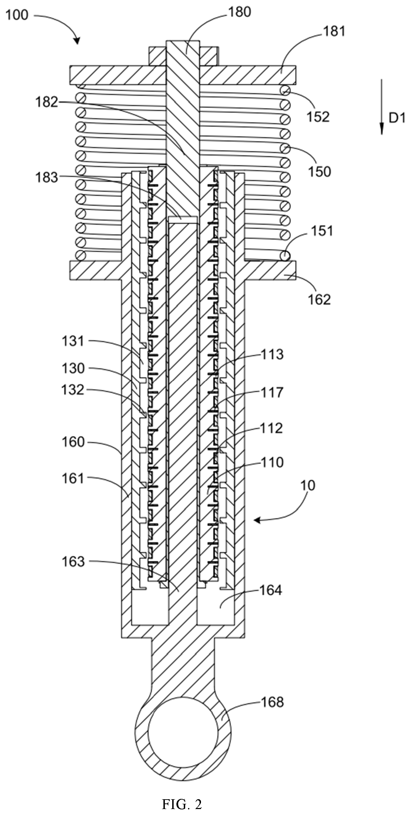

FIG. 1 and FIG. 2 show an active suspension 100 according to a preferred embodiment provided by the present disclosure. Preferably, the active suspension 100 is used in a vehicle to reduce vehicle vibration.

The active suspension 100 includes a motor 10 according to a preferred embodiment provided by the present disclosure. The motor 10 includes a primary structure 110 and a secondary structure 130. The primary structure 110 includes at least one fixing surface 114, and the main body of the primary structure 110 is made of a magnetically conductive structure. The main body of the primary structure 110 is a stator core. The length direction of the primary structure 110 is parallel to the first direction D1. The length direction of the secondary structure 130 is parallel to the first direction D1. The secondary structure 130 is made of a magnetically conductive structure. The secondary structure 130 is a mover core. The primary structure 110 and the secondary structure 130 are arranged opposite to each other in a direction perpendicular to the first direction D1. The secondary structure 130 is spaced apart from the primary structure 110. There is a constant air gap between the secondary structure 130 and the primary structure 110.

The primary structure 110 further includes a coil 112, and the coil 112 is arranged on the fixing surface 114. The coil 112 is configured as a disk coil, for example. The surrounding center line of the coil 112 is not parallel to the first direction D1, and is perpendicular to the first direction D1, for example. The secondary structure 130 is arranged opposite to the coil 112. A power supply provides electrical energy to the coil 112. The power supply may be a battery, external alternating current, a generator, or other power supply devices. After the coil 112 is energized, it generates a magnetic field. The magnetic lines of force of the magnetic field pass through the fixing surface 114 and further through the secondary structure 130, enabling the secondary structure 130 and the primary structure 110 to move relative to each other along the first direction D1. In particular, the primary structure 110 is fixed, and the electromagnetic force can fully act on the secondary structure 130 along the first direction D1, allowing the secondary structure 130 to move along the first direction D1. Of course, the secondary structure 130 may further be fixed, and the electromagnetic force between the secondary structure 130 and the coil 112 enables the primary structure 110 to move along the first direction D1.

As an embodiment, the size of the primary structure 110 in the first direction D1 is larger than that of the secondary structure 130. This can save materials for the secondary structure 130 and reduce costs. As another embodiment, the length of the primary structure 110 in the first direction D1 is equal to that of the secondary structure 130. In this way, the primary structure 110 and the secondary structure 130 can be fully utilized; that is, the coil 112 located on the primary structure 110 can fully generate a magnetic field in the first direction D1, and this magnetic field can fully act on the secondary structure 130, thereby enabling the secondary structure 130 to have a larger displacement when moving along the first direction D1.

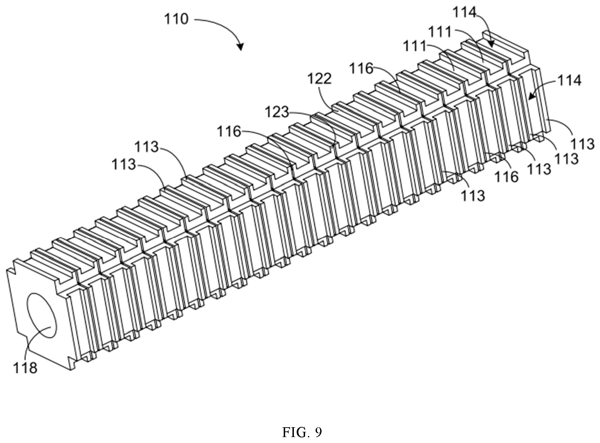

In order to ensure that the electromagnetic force generated by the coil 112 on the secondary structure 130 can drive the secondary structure 130 to move with maximum efficiency, the main body of the primary structure 110 is configured as a polyhedral structure, such as a polygonal prism main body. This structure is simple and reliable, reducing processing difficulty. Specifically, as shown in FIG. 9, the primary structure 110 includes at least one fixing surface 114, and preferably includes a plurality of fixing surfaces 114, and the fixing surfaces 114 are configured as planar structures. The plurality of fixing surfaces 114 are arranged in a circumferential direction, that is, the plurality of fixing surfaces 114 are connected in sequence to form the side surfaces of a polygonal prism.

The main body of the primary structure 110 is configured as an integral part. For example, the main body of the primary structure 110 is configured as a quadrangular prism, such as a rectangular prism structure, which is simple and reliable and reduces processing difficulty. The cross-sectional shape of the main body of the primary structure 110 is a quadrilateral, such as a rectangle. Preferably, the cross-sectional shape of the main body of the primary structure 110 is a square. In this embodiment, the "cross-section" is perpendicular to the first direction D1. The primary structure 110 includes four fixing surfaces 114. The four fixing surfaces 114 are connected in sequence. The angle between adjacent fixing surfaces 114 is a right angle. The main body of the primary structure 110 may further be configured as a triangular prism structure, a pentagonal prism structure, a hexagonal prism structure, or a prism structure with more faces, and this embodiment is not intended to limit this. This avoids difficulties in manufacturing the primary structure 110.

The fixing surface 114 is arranged with a plurality of first protruding portions 113, and the plurality of first protruding portions 113 are spaced apart along the first direction D1. The first protruding portions 113 protrude from the fixing surface 114. The first protruding portions 113 protrude from the fixing surface 114 toward the secondary structure 130. The coil 112 is arranged around the first protruding portions 113. The surrounding center line of the coil 112 is perpendicular to the fixing surface 114. The coil 112 forms a racetrack-shaped coil structure. Therefore, the coil 112 forms a closed structure, and the electromagnetic force generated by the coil 112 on the secondary structure 130 can drive the secondary structure 130 to move along the first direction D1. After the coil 112 is energized, it generates a magnetic field and makes the primary structure 110 magnetic. When energized, the coil 112 can generate a strong electromagnetic force on the secondary structure 130, thereby driving the secondary structure 130 to move.

The motor 10 has a simple structure, reliable performance, and low manufacturing difficulty.

First grooves 111 are formed between adjacent first protruding portions 113. The opening direction of the first grooves 111 faces the secondary structure 130. To further increase the electromagnetic force generated by the primary structure 110 (on which the coil 112 is disposed) on the secondary structure 130, the fixing surface 114 is arranged with a plurality of first protruding portions 113 to form a plurality of first grooves 111, and the plurality of first grooves 111 are spaced apart along the first direction D1.

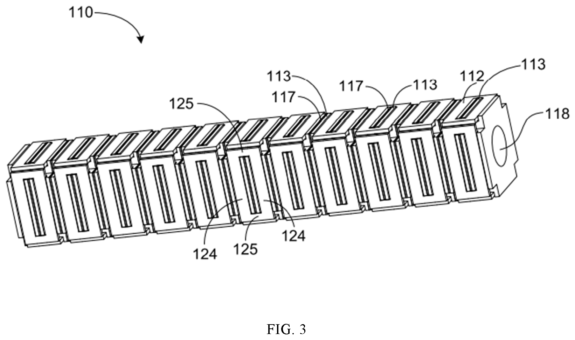

A part of the coil 112 is disposed in the first groove 111, and the other part of the coil 112 protrudes from the first groove 111. The coil 112 is disposed in each of the plurality of first grooves 111, and the coils 112 in the plurality of first grooves 111 can all generate electromagnetic force on the secondary structure 130. The coil 112 in each first groove 111 can form an independent electronic unit, so that the windings formed by the coils 112 in the plurality of first grooves 111 can form a plurality of independent electronic units corresponding to the secondary structure 130. As shown in FIG. 3, the coil 112 includes a first line segment 124 disposed in the first groove 111. Each of the plurality of first line segments 124 can generate an electromagnetic force acting on the secondary structure 130 to move the secondary structure 130.

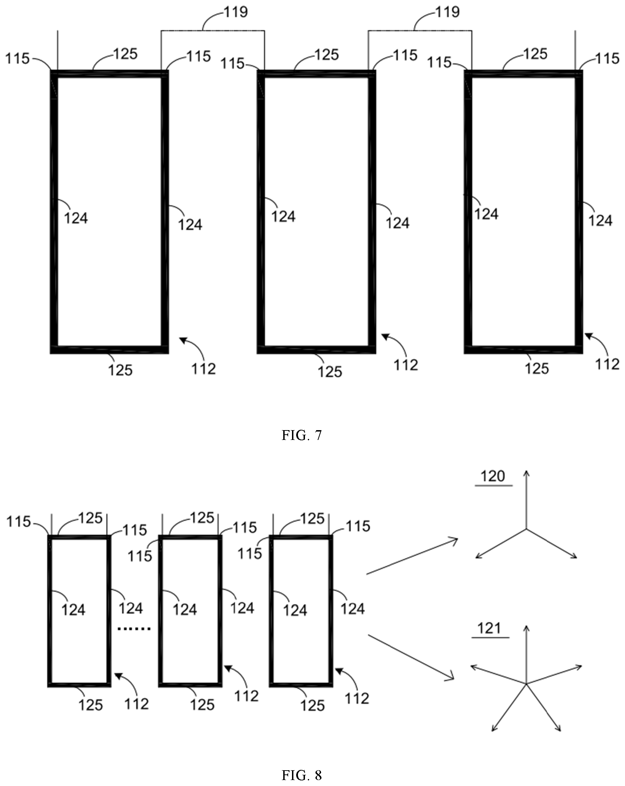

As shown in FIG. 7 and FIG. 8, the corners 115 of the coils 112 in the plurality of first grooves 111 each have a wire inlet end and a wire outlet end. The wire inlet end of one coil 112 is connected to the wire outlet end of another coil 112 through a wire 119, so that the two coils 112 are connected in series. Further, the coils 112 in the plurality of first grooves 111 on the same fixing surface 114 are connected in series. The coils 112 in the plurality of first grooves 111 on the same fixing surface 114 are connected in series to form a winding. At least three-phase windings are formed on the same fixing surface 114, and each phase winding includes one coil 112, or each phase winding includes a plurality of coils 112 connected in series. Examples include three-phase windings 120 and multi-phase windings 121.

In this way, the three-phase windings 120 or multi-phase windings 121 independently formed on each fixing surface 114 and the secondary structure 130 opposite thereto can together form a number of switched flux linear motor units. Therefore, the electromagnetic force output modes of the active suspension 100 can be more diverse, and the fault tolerance of the system is improved.

To ensure the stability of the magnetic field generated by the primary structure 110, the coils 112 on different fixing surfaces 114 are not electrically connected to each other. The coil 112 on the first fixing surface 114 generates a first magnetic field, the coil 112 on the second fixing surface 114 generates a second magnetic field, and the coil 112 on the Nth fixing surface 114 generates an Nth magnetic field, where N is an integer greater than 2. When the coil 112 on one of the fixing surfaces 114 is damaged and cannot generate a magnetic field, the coils 112 on other fixing surfaces 114 can still generate magnetic fields. Therefore, the reliability of the primary structure 110 is improved.

In an embodiment, to increase the electromagnetic force, as shown in FIG. 1 to FIG. 3 and FIG. 9, the motor 10 further includes a magnetic member 117. The first protruding portion 113 is arranged with an additional slot 116, and the magnetic member 117 is disposed in the additional slot 116. The magnetic member 117 is made of magnetic steel. The magnetic member 117 can act together with the electromagnetic force generated by the coil 112 to jointly drive the secondary structure 130 to move along the first direction D1. The opening direction of the additional slot 116 faces the secondary structure 130. The magnetic member 117 is embedded in the additional slot 116. The coil 112 is arranged around the magnetic member 117. The fixing surface 114 is configured as a planar structure, and the magnetic member 117 is configured as a flat plate structure. This reduces processing and installation precision requirements. The length direction of the magnetic member 117 is parallel to the length direction of the first line segment 124, and the length direction of the magnetic member 117 is perpendicular to the first direction D1. Therefore, the magnetic member 117 can generate sufficient magnetic force along the first direction D1.

Since the coil 112 surrounds the first protruding portion 113, two adjacent coils 112 are separated by a first protruding portion 113. Therefore, two adjacent coils 112 are not in direct contact. This ensures that the energization of two adjacent coils 112 does not affect each other (e.g., a short circuit is less likely to occur). Therefore, the magnetic member 117 is disposed between adjacent coils 112 along the first direction D1. As an embodiment, the magnetic members 117 disposed on each first protruding portion 113 have the same size. In particular, the magnetic members 117 disposed on each first protruding portion 113 have the same length. Therefore, the magnetic members 117 disposed on the plurality of first protruding portions 113 can all generate electromagnetic forces in the same direction, avoiding disorder caused by the interaction between multiple electromagnetic forces.

To make full use of the electromagnetic force of the coil 112, the longitudinal cross-sectional shape of the first protruding portion 113 is configured as a rectangle. In this embodiment, the "longitudinal cross-section" is parallel to the first direction D1. The first protruding portion 113 includes two first side surfaces 122 and two second side surfaces 123, and the first side surfaces 122 and the second side surfaces 123 are vertically connected. The two first side surfaces 122 are arranged opposite to each other along the first direction D1. The two second side surfaces 123 are arranged opposite to each other along a third direction D3 perpendicular to the first direction D1. The third direction D3 is further perpendicular to the second direction D2. The first side surfaces 122 are perpendicular to the first direction D1. The second side surfaces 123 are parallel to the first direction D1. The length of the first side surfaces 122 is greater than the length of the second side surfaces 123. The coil 112 is arranged around the first side surfaces 122 and the second side surfaces 123. This ensures that the coil 112 has a large electromagnetic force along the first direction D1, thereby driving the secondary structure 130 to move along the first direction D1.

Furthermore, as shown in FIG. 3, the coil 112 is wound around the first protruding portion 113 into a shape similar to a square frame. The coil 112 includes two first line segments 124, and the two first line segments 124 are spaced apart along the first direction D1. The length direction of the first line segments 124 is perpendicular to the first direction D1. The two first line segments 124 of the same coil 112 are spaced apart along the first direction D1, and a first protruding portion 113 is disposed between the two first line segments 124 along the first direction D1. Therefore, the two first line segments 124 of the same coil 112 can be respectively located in two adjacent first grooves 111. One first line segment 124 of the same coil 112 is located in one first groove 111, and the other first line segment 124 of the same coil 112 is located in another first groove 111. This ensures that the two first line segments 124 can fully generate magnetic field force along the first direction D1, thereby driving the secondary structure 130 to move along the first direction D1.

The coil 112 further includes two second line segments 125, and the first line segments 124 and the second line segments 125 are substantially vertically connected. The two second line segments 125 are arranged opposite to each other along a third direction D3 perpendicular to the first direction D1. The second line segments 125 are located between the two first line segments 124 along the first direction D1. The second line segments 125 are parallel to the first direction D1. In this way, the direction of the electromagnetic force generated by the first line segments 124 on the secondary structure 130 is parallel to the first direction D1. The second line segments 125 provide a connected path for current.

The length of the first line segments 124 is greater than that of the second line segments 125, for example. The first line segments 124 are disposed outside the first side surfaces 122. The first line segments 124 are attached to the first side surfaces 122. The second line segments 125 are disposed outside the second side surfaces 123. The second line segments 125 are attached to the second side surfaces 123. This ensures that the coil 112 has a large electromagnetic force along the first direction D1, thereby driving the secondary structure 130 to move along the first direction D1.

The two second line segments 125 of the same coil 112 are spaced apart in a direction perpendicular to the first direction D1, and one first protruding portion 113 mentioned above is disposed between the two second line segments 125 along the length direction of the first line segments 124. The first grooves 111 and the first protruding portions 113 are flush with each other along the length direction of the first line segments 124. To ensure that the coil 112 can be arranged around the first protruding portion 113, the second line segments 125 protrude from the first grooves 111 along the length direction of the first line segments 124. That is, the second line segments 125 are located outside the first grooves 111, meaning the coil 112 is wound around the first protruding portion 113. The second line segments 125 are located outside the second side surfaces 123 along the length direction of the first line segments 124. The second line segments 125 do not affect the movement of the secondary structure 130 along the first direction D1.

Another first protruding portion 113 is disposed between two adjacent coils 112. In particular, the other first protruding portion 113 is located between one first line segment 124 of one disk-shaped coil 112 and one first line segment 124 of another coil 112. That is, one first protruding portion 113 is located between two adjacent first line segments 124 of two adjacent coils 112. The second line segments 125 of two adjacent coils 112 are spaced apart along the first direction D1. Two adjacent coils 112 are not in direct contact. This ensures that the energization of two adjacent coils 112 does not affect each other.

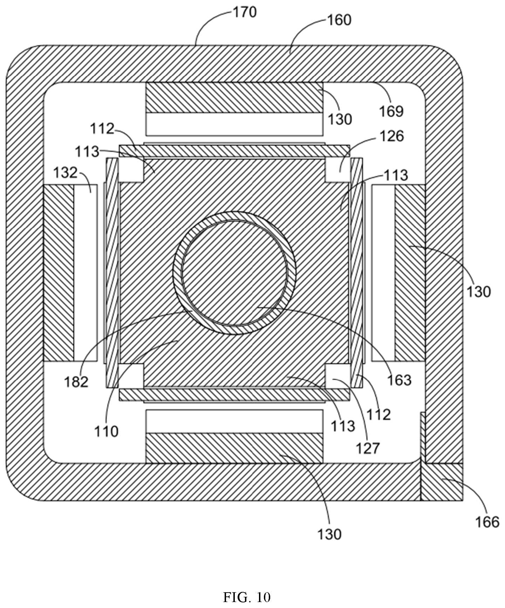

To avoid short circuits caused by direct contact between the coils 112 on adjacent fixing surfaces 114, the first protruding portions 113 on circumferentially adjacent fixing surfaces 114 are arranged at intervals. As shown in FIG. 10, gaps 126 are formed between the first protruding portions 113 of adjacent fixing surfaces 114. The gaps 126 serve as heat dissipation channels for the coils 112, ensure that the coils 112 on adjacent fixing surfaces 114 are spaced apart, and further avoid temperature and electromagnetic interference during operation. Preferably, the gaps 126 are further located between the first protruding portions 113 of one fixing surface 114 and the coils 112 of another adjacent fixing surface 114. This ensures that the first protruding portions 113 of one fixing surface 114 and the coils 112 of another fixing surface 114 are spaced apart, avoiding mutual influence. The gaps 126 can extend along the first direction D1 to form chambers 127. The chambers 127 are configured as rectangular prism structures, for example. This ensures that the plurality of coils 112 on the first fixing surface 114 and the plurality of first protruding portions 113 on the second fixing surface 114 are spaced apart, avoiding interference between the plurality of coils 112 and the plurality of first protruding portions 113 on adjacent fixing surfaces 114.

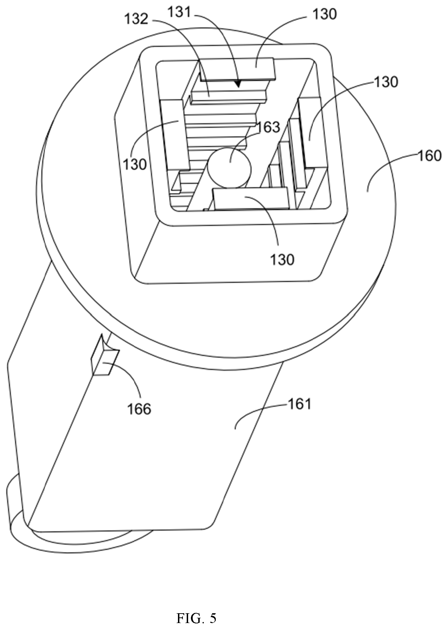

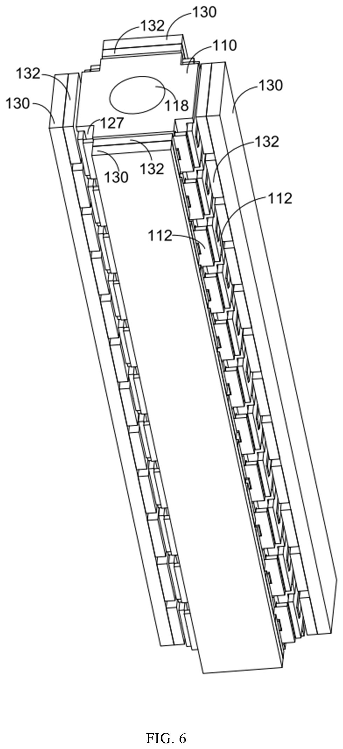

FIG. 5 and FIG. 6 show the structure of the secondary structure 130. The secondary structure 130 includes a plurality of second protruding portions 132, and the second protruding portions 132 protrude toward the primary structure 110 along a second direction D2 perpendicular to the first direction D1. The plurality of second protruding portions 132 are spaced apart along the first direction D1. Second grooves 131 are formed between adjacent second protruding portions 132. The opening direction of the second grooves 131 faces the primary structure 110. The second protruding portions 132 and the second grooves 131 together form an uneven structure. The magnetic field generated by the energized coil 112 acts on the uneven structure of the secondary structure 130, enabling the electromagnetic force generated by the coil 112 on the secondary structure 130 to drive the secondary structure 130 to move.

The second protruding portions 132 are located between two second grooves 131 along the first direction D1. In the projection of the motor 10 in a direction perpendicular to the first direction D1, the first grooves 111 and the second grooves 131 at least partially overlap. Therefore, the coils 112 are at least partially arranged opposite to the second grooves 131. This ensures that the energized coil 112 generates an electromagnetic force acting on the second protruding portions 132, and the magnetic field lines of the magnetic field generated by the coil 112 cut across the second protruding portions 132, thereby driving the secondary structure 130 to move along the first direction D1. In the projection of the motor 10 along the second direction D2 (perpendicular to the first direction D1), the coils 112 and the second grooves 131 at least partially overlap.

Furthermore, to correspond to the primary structure 110, the motor 10 includes a plurality of secondary structures 130, so that the secondary structures 130 are in one-to-one correspondence with the fixing surfaces 114. The plurality of secondary structures 130 may be spaced apart from each other. The angle formed between adjacent secondary structures 130 is equal to the angle formed between adjacent fixing surfaces 114. The three-phase windings 120 or multi-phase windings 121 independently formed on each fixing surface 114 can together form a number of switched flux linear motor units. Therefore, the electromagnetic force output modes of the motor 10 can be more diverse, and the fault tolerance of the system is improved.

In the illustrated embodiment, the plurality of fixing surfaces 114 of the primary structure 110 enclose a cylindrical shape, so that the primary structure 110 is cylindrical. The axial direction of the primary structure 110 is the first direction D1. The radial direction of the primary structure 110 is the second direction D2. The secondary structure 130 is spaced apart from the primary structure 110 along the radial direction of the primary structure 110. The circumferential direction of the primary structure 110 is the third direction D3.

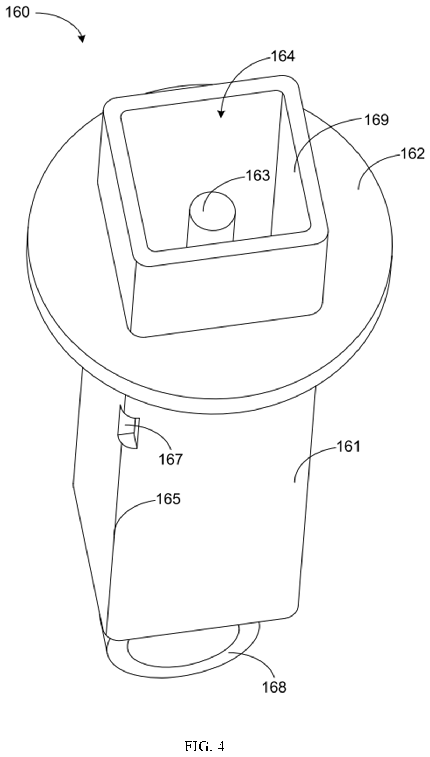

As shown in FIG. 4 and FIG. 5, in order to fix the plurality of secondary structures 130, the motor 10 further includes a support member 160, and the support member 160 is configured as a hollow polyhedral structure. The support member 160 can ensure that the secondary structures 130 are opposite to the coils 112. The primary structure 110 and the secondary structure 130 are located in the support member 160, so that after the coils 112 in the support member 160 are energized, they generate an electromagnetic force on the secondary structure 130, which can drive the secondary structure 130 to move. In addition, the secondary structure 130 is connected to the support member 160. The secondary structure 130 moves along the first direction D1 to drive the support member 160 to move along the first direction D1.

Specifically, the support member 160 includes a main body 161, and the main body 161 is configured as a sleeve structure. The main body 161 is used to accommodate the primary structure 110 and the secondary structure 130. The main body 161 includes a main body hole 164, and the length direction of the main body hole 164 is parallel to the first direction D1. The primary structure 110 and the secondary structure 130 are disposed in the main body hole 164. The shape of the main body hole 164 matches the shape of the primary structure 110. For example, the cross-sectional shape of the main body hole 164 is a quadrilateral.

The main body 161 may be configured as a polyhedral sleeve structure. The main body 161 includes a plurality of inner surfaces 169, and the plurality of inner surfaces 169 are connected in sequence to jointly enclose the main body hole 164. That is, the inner surfaces 169 are the inner wall surfaces of the main body hole 164.

The main body 161 is configured as an integral part, which has a simple and reliable structure and reduces processing difficulty. The inner surfaces 169 are arranged in one-to-one opposition to the fixing surfaces 114. In the embodiment shown in FIG. 4, the main body 161 is configured as a rectangular prism sleeve structure, and the cross-sectional shape of the main body 161 is a rounded rectangle. Preferably, the cross-sectional shape of the main body 161 is a rounded square. The main body 161 includes four inner surfaces 169. The four inner surfaces 169 are connected in sequence. The angle between adjacent inner surfaces 169 is a right angle. The four inner surfaces 169 are opposite to the four fixing surfaces 114 respectively. The main body 161 may be configured as other prism structures to match the shape of the primary structure 110. For example, the main body 161 may further be configured as a triangular prism structure, a pentagonal prism structure, a hexagonal prism structure, or a prism structure with more faces according to the shape of the primary structure 110. This embodiment is not intended to limit this.

The main body 161 is connected to the secondary structure 130. The main body 161 and the secondary structure 130 are fixedly connected. The main body 161 and the secondary structure 130 are fixedly connected together by bonding or welding. Therefore, the secondary structure 130 moves to drive the main body 161 to move along the first direction D1. As shown in FIG. 4, the inner surface 169 faces the primary structure 110. The inner surface 169 is connected to the secondary structure 130. Furthermore, each inner surface 169 is connected to one secondary structure 130, so that each fixing surface 114 of the primary structure 110 is opposite to one secondary structure 130 respectively. In this way, after the coil 112 on each fixing surface 114 is energized, it can act on the corresponding secondary structure 130 to make the secondary structure 130 move. The plurality of secondary structures 130 can move at least partially simultaneously to jointly drive the support member 160 to move.

In order to monitor the displacement of the secondary structure 130 in real time, the main body 161 is further arranged with a displacement sensor 166. The displacement sensor 166 is located at the corner 165 of the main body 161. The displacement sensor 166 is located at the edge of the main body 161. A notch 167 is arranged at the corner 165 of the main body 161. The notch 167 is recessed inward from the outer surface of the main body 161 and extends through two adjacent inner surfaces 169. The displacement sensor 166 is disposed in the notch 167. This avoids temperature and electromagnetic interference to the displacement sensor 166 when the coil 112 is energized, and improves the space utilization rate of the support member 160.

The support member 160 further includes a guide portion 163, and the guide portion 163 is connected to the main body 161. The guide portion 163 is configured as a rod-shaped structure. The guide portion 163 is disposed in the main body hole 164. The guide portion 163 may be connected to the bottom of the interior of the main body 161 along the first direction D1. The guide portion 163 and the main body 161 may be connected together by welding or integral molding. The movement of the main body 161 can drive the guide portion 163 to move.

As shown in FIG. 3 and FIG. 6, the primary structure 110 includes a guide hole 118, and the axial direction of the guide hole 118 is parallel to the first direction D1. The guide portion 163 is inserted into the primary structure 110. In particular, the guide portion 163 is inserted into the guide hole 118. The guide portion 163 can move relative to the primary structure 110 along the first direction D1. The primary structure 110 exerts a restraining effect on the guide portion 163 to achieve radial positioning. Furthermore, the guide portion 163 can play a guiding and limiting role in the movement of the secondary structure 130, ensuring that the secondary structure 130 moves linearly along the first direction D1. This prevents the primary structure 110 and the secondary structure 130 from contacting each other due to radial unbalanced magnetic pull when they are eccentric, and ensures that there is a constant air gap between the primary structure 110 and the secondary structure 130 when the active suspension 100 is in operation.

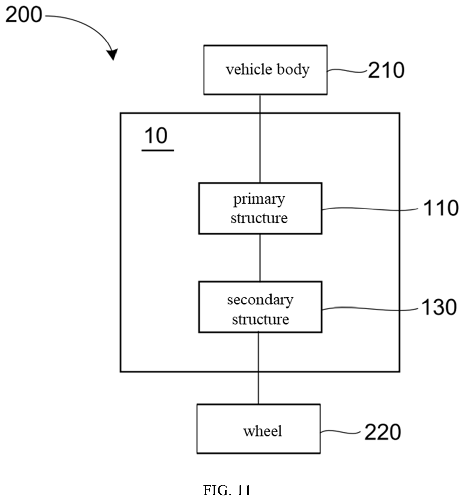

FIG. 11 shows a vehicle 200 according to a specific embodiment of the present disclosure. The active suspension 100 is used in the vehicle 200 to reduce vibrations of the vehicle 200. In other words, the vehicle 200 includes the active suspension 100. The vehicle 200 includes the foregoing motor 10. The vehicle 200 further includes wheels 220 and a vehicle body 210. The wheels 220 travel on the road surface, and the active suspension 100 connects the wheels 220 and the vehicle body 210. The active suspension 100 can reduce the vibration transmitted from the wheels 220 to the vehicle body 210. The stiffness and damping characteristics of the active suspension 100 can be dynamically and adaptively adjusted according to the driving conditions of the vehicle 200 (such as the motion state of the vehicle 200 and road conditions), so that the active suspension 100 is in the optimal vibration reduction state.

The primary structure 110 of the motor 10 is used to connect to the vehicle body 210, and the secondary structure 130 is used to connect to the wheels 220. Specifically, one end of the primary structure 110 is used to connect to the vehicle body 210, and one end of the secondary structure 130 is used to connect to the wheels 220. The electromagnetic force generated by the coil 112 on the secondary structure 130 can drive the secondary structure 130 to move, thereby driving the wheels 220 to move, so as to reduce the vibration of the vehicle body 210.

As shown in FIG. 1, FIG. 2, and FIG. 10, preferably, the active suspension 100 further includes an elastic member 150. The elastic member 150 is configured as a rigid hard spring. Both ends of the elastic member 150 are respectively used to abut against the vehicle body 210 and the wheels 220. In this embodiment, "abutment" (or abutting) may be direct contact or indirect contact.

For example, both ends of the elastic member 150 along the first direction D1 are respectively connected to the primary structure 110 and the secondary structure 130. In this embodiment, the "first direction D1" is parallel to the height direction of the vehicle 200. The elastic member 150 can generate elastic deformation along the first direction D1. Specifically, the elastic member 150 includes a first end 151 and a second end 152, and the first end 151 and the second end 152 are respectively located at both ends of the elastic member 150 along the first direction D1. The first end 151 of the elastic member 150 acts on the secondary structure 130, and the second end 152 of the elastic member 150 acts on the primary structure 110.

Furthermore, the primary structure 110 is used to connect to the vehicle body 210, and the secondary structure 130 is used to connect to the wheels 220. The elastic member 150 can absorb the impact force on the wheels 220 when the vehicle 200 travels on a bumpy road, thereby playing a shock-absorbing role on the vehicle body 210. The first end 151 of the elastic member 150 along the height direction of the vehicle 200 abuts against the wheels 220 through the secondary structure 130. The second end 152 of the elastic member 150 along the height direction of the vehicle 200 abuts against the vehicle body 210 through the primary structure 110. The second end 152 of the elastic member 150 can support the vehicle body 210. The elastic member 150 can play a role in connecting the vehicle body 210 and the secondary structure 130, and the self-weight of the vehicle body 210 acts on the elastic member 150, so that the elastic member 150 can support the vehicle body 210. The elastic member 150 can transmit the gravity of the vehicle body 210 to the wheels 220 through the secondary structure 130.

The first end 151 of the elastic member 150 can act on the secondary structure 130 by abutting against the support member 160, so as to avoid structural damage to the secondary structure 130 caused by direct connection between the secondary structure 130 and the elastic member 150.

The secondary structure 130 is further connected to the wheels 220 through the support member 160. The support member 160 includes a ring portion 168, and the ring portion 168 is located at the bottom of the support member 160. The ring portion 168 is used to connect to the axle of the wheel 220.

The support member 160 further includes a support plate 162, and the support plate 162 protrudes from the main body 161. The main body 161 further includes an outer surface 170. The support plate 162 is connected to the outer surface 170 of the main body 161. In this embodiment, the "outer surface 170 of the main body 161" refers to the surface of the main body 161 facing away from the secondary structure 130. The support plate 162 is configured as a flat plate structure, which has a simple structure and is easy to process. The support plate 162 is arranged around the main body 161. The support plate 162 is spaced apart from the end surface of the main body 161 along the first direction D1. The end of the main body 161 is inserted into the spring inner ring of the elastic member 150. The support plate 162 abuts against the first end 151 of the elastic member 150. The elastic force of the elastic member 150 acts on the support plate 162, so that the support member 160 is stressed evenly.

The active suspension 100 further includes a connecting member 180, and the connecting member 180 is fixedly connected to the primary structure 110. The connecting member 180 and the primary structure 110 can be connected together by welding or threaded connection. The primary structure 110 is used to connect to the vehicle body 210 through the connecting member 180. The second end 152 of the elastic member 150 abuts against the connecting member 180. In this way, the elastic member 150 acts on the primary structure 110 by abutting against the connecting member 180, so as to avoid direct connection between the primary structure 110 and the vehicle body 210 with the elastic member 150, and prevent structural damage to the primary structure 110 that affects the generation of electromagnetic force.

Specifically, the connecting member 180 includes an abutment plate 181, and the abutment plate 181 abuts against the second end 152 of the elastic member 150. The elastic member 150 is located between the abutment plate 181 and the support plate 162. The elastic force of the elastic member 150 acts on the abutment plate 181. The abutment plate 181 is configured as a flat plate structure, which has a simple structure and is easy to process. The elastic force of the elastic member 150 acts on the abutment plate 181, so that the connecting member 180 is stressed evenly, thereby making the vehicle body 210 stressed evenly.

The connecting member 180 further includes a matching portion 182, and the matching portion 182 protrudes from the abutment plate 181 along the first direction D1. The matching portion 182 may be configured as a rod-shaped structure. The axial direction of the matching portion 182 is parallel to the first direction D1. The matching portion 182 protrudes toward the primary structure 110 along the first direction D1. A part of the matching portion 182 is inserted into the spring inner ring of the elastic member 150 and passes through the elastic member 150. The matching portion 182 is inserted into the support member 160 along the first direction D1. The matching portion 182 is connected to the primary structure 110 to connect the primary structure 110 and the connecting member 180 together. One end of the matching portion 182 along the first direction D1 is used to connect to the vehicle body 210, and the other end of the matching portion 182 along the first direction D1 is connected to the primary structure 110. The primary structure 110 and the matching portion 182 may be connected together by bonding or welding. The primary structure 110 and the connecting member 180 are fixed together, thereby fixing the primary structure 110 to the vehicle body 210.

More specifically, the matching portion 182 is inserted into the guide hole 118 of the primary structure 110 along the first direction D1, and the matching portion 182 is fixedly connected to the primary structure 110. The matching portion 182 and the primary structure 110 may be fixedly connected by welding, bonding, or threaded connection. The guide hole 118 may be configured as a circular hole. The matching portion 182 is configured as a cylindrical structure. It will be understood that the shape of the matching portion 182 matches that of the guide hole 118, and the matching portion 182 and the guide hole 118 are fixed together. The guide hole 118 may further be configured as a polygonal hole, and the matching portion 182 may be configured as a polyhedral structure, where the shape of the matching portion 182 matches that of the guide hole 118. This embodiment is not intended to limit this.

The matching portion 182 includes a matching hole 183 (see FIG. 2), and the axial direction of the matching hole 183 is parallel to the axial direction of the guide hole 118. The matching hole 183 and the guide hole 118 are coaxially arranged. The length direction of the matching hole 183 is parallel to the first direction D1. The guide portion 163 of the support member 160 is inserted into the matching hole 183. The matching hole 183 is configured as a circular hole, and the guide portion 163 is configured as a cylindrical structure. The guide portion 163 is inserted into the matching hole 183, so that the guide portion 163 is inserted into the primary structure 110. The guide portion 163 can move along the first direction D1 relative to the matching hole 183 along with the support member 160. Therefore, the matching hole 183 exerts a constraint on the guide portion 163 to achieve radial positioning, play a guiding and limiting role, and ensure that the secondary structure 130 can move linearly along the first direction D1. This prevents the primary structure 110 and the secondary structure 130 from contacting each other due to radial unbalanced magnetic pull when they are eccentric, and ensures that there is a constant air gap between the primary structure 110 and the secondary structure 130 when the active suspension 100 is in operation. The matching hole 183 may further be configured as a polygonal hole, and the guide portion 163 may be configured as a polyhedral structure, where the shape of the guide portion 163 matches that of the matching hole 183. This embodiment is not intended to limit this.

When the vehicle 200 travels on a bumpy road, the control device controls the current direction of the motor 10 according to the data monitored by the road condition sensor. When the coil 112 is not energized, the vehicle 200 can further reduce vibrations directly through the elastic member 150.

For example, as shown in FIG. 1, the guide portion 163 can be closely attached to the top surface of the matching hole 183. When the vehicle 200 travels on a road with potholes, the control device controls the current direction of the motor 10 to be positive. The electromagnetic force generated by the coil 112 drives the secondary structure 130 to move away from the abutment plate 181 along the first direction D1. The secondary structure 130 can drive the guide portion 163 to move away from the abutment plate 181, so that the guide portion 163 is spaced apart from the top surface of the matching hole 183. In this way, the secondary structure 130 can drive the support member 160 to move downward along the height direction of the vehicle 200, causing the first end 151 of the elastic member 150 to move downward along the first direction D1 to stretch the elastic member 150. This drives the wheel 220 to move downward to fit the pothole surface, thereby reducing the vibration of the vehicle body 210.

As shown in FIG. 2, the guide portion 163 can further be spaced apart from the top surface of the matching hole 183. When the vehicle 200 travels on a road with protrusions, the control device controls the current direction of the motor 10 to be reverse. The electromagnetic force generated by the coil 112 drives the secondary structure 130 to move toward the abutment plate 181 along the first direction D1. The secondary structure 130 can drive the guide portion 163 to move toward the abutment plate 181, so that the guide portion 163 is attached to the top surface of the matching hole 183. In this way, the secondary structure 130 can drive the support member 160 to move upward along the height direction of the vehicle 200, causing the first end 151 of the elastic member 150 to move upward along the first direction D1 to compress the elastic member 150. This drives the wheel 220 to move upward to fit the protrusion surface, thereby reducing the vibration of the vehicle body 210.

The vehicle 200 further includes a plurality of road condition sensors and a control device. The plurality of road condition sensors are mounted on the vehicle body 210 for real-time monitoring of road conditions. The plurality of road condition sensors are all electrically connected to the control device to feed back the monitored data to the control device. The control device is electrically connected to the power supply to control the current direction according to the data fed back by the road condition sensors. Therefore, the control device of the vehicle 200 can timely control the movement direction of the secondary structure 130. The control device can further control the magnitude of the current according to the data fed back by the road condition sensors. Therefore, the control device of the vehicle 200 can timely control the displacement of the secondary structure 130.

Unless otherwise defined, the technical and scientific terms used herein have the same meanings as commonly understood by those skilled in the technical field of the present disclosure. The terms used herein are only for the purpose of describing specific implementations and are not intended to limit the present disclosure. Terms such as "part" and "component" used herein can refer to a single part or a combination of multiple parts. Terms such as "installation" and "arrangement" used herein can refer to a component being directly attached to another component or a component being attached to another component through an intermediate part. Features described in one embodiment herein can be applied to another embodiment alone or in combination with other features, unless the feature is inapplicable in the other embodiment or otherwise specified.

The present disclosure has been described through the above embodiments, but it will be understood that the above embodiments are only for the purpose of illustration and description, and are not intended to limit the present disclosure to the scope of the described embodiments. In addition, those skilled in the art can understand that the present disclosure is not limited to the above embodiments, and more variations and modifications can be made according to the teachings of the present disclosure, and these variations and modifications all fall within the scope of protection claimed by the present disclosure. The protection scope of the present disclosure is defined by the appended claims and their equivalent scopes.

## Claims

1. A motor (10), comprising:
a primary structure (110), the primary structure (110) comprising:
at least one fixing surface (114), the fixing surface (114) being arranged with a plurality of first protruding portions (113), the first protruding portions (113) protruding from the fixing surface (114), and the plurality of first protruding portions (113) being spaced apart along a first direction; and
a coil (112), the coil (112) being arranged around the first protruding portions (113), a surrounding center line of the coil (112) being perpendicular to the fixing surface (114), and the first direction being not parallel to the surrounding center line; and
a secondary structure (130), the secondary structure (130) being spaced apart from the primary structure (110), and the secondary structure (130) being arranged opposite to the coil (112).

2. The motor (10) according to claim 1, wherein first grooves (111) are formed between adjacent first protruding portions (113); the coil (112) comprises first line segments (124) and second line segments (125) connected to the first line segments (124); two of the first line segments (124) are spaced apart along the first direction, one of the two first line segments (124) is located in one of the first grooves (111), and the other of the two first line segments (124) is located in another of the first grooves (111); a length direction of the first line segments (124) is perpendicular to the first direction; the second line segments (125) are located between the two first line segments (124) along the first direction; and the first protruding portions (113) are located between the two second line segments (125) along the length direction.

3. The motor (10) according to claim 1 or 2, wherein the motor (10) further comprises:
a magnetic member (117), the first protruding portions (113) is arranged with additional slots (116), and the magnetic member (117) is disposed in the additional slots (116).

4. The motor (10) according to any one of claims 1 to 3, wherein the primary structure (110) comprises a plurality of the fixing surfaces (114), and the plurality of fixing surfaces (114) are arranged in a circumferential direction; in the circumferential direction, the first protruding portions (113) of adjacent fixing surfaces (114) are spaced apart to form gaps (126).

5. The motor (10) according to any one of claims 1 to 4, wherein at least three-phase windings are formed on the same fixing surface (114), and each phase winding comprises one coil (112) or each phase winding comprises a plurality of coils (112) connected in series; and/or,
the primary structure (110) comprises a plurality of the fixing surfaces (114), and the coils (112) on different fixing surfaces (114) are not electrically connected to each other.

6. The motor (10) according to any one of claims 1 to 5, wherein the secondary structure (130) comprises:
a plurality of second protruding portions (132), the plurality of second protruding portions (132) are spaced apart along the first direction; second grooves (131) are formed between adjacent second protruding portions (132); and an opening direction of the second grooves (131) faces the primary structure (110).

7. The motor (10) according to claim 6, wherein the coil (112) is at least partially arranged opposite to the second groove (131).

8. The motor (10) according to any one of claims 1 to 7, wherein the size of the primary structure (110) along the first direction is greater than or equal to the size of the secondary structure (130) along the first direction.

9. The motor (10) according to any one of claims 1 to 8, wherein the primary structure (110) comprises a plurality of the fixing surfaces (114), and the plurality of fixing surfaces (114) are arranged in a circumferential direction;
the motor (10) further comprises a support member (160), the support member (160) comprises a main body (161), the main body (161) comprises a plurality of inner surfaces (169), the inner surfaces (169) are arranged in one-to-one opposition to the fixing surfaces (114), and the inner surfaces (169) are connected to the secondary structure (130).

10. The motor (10) according to claim 9, wherein the support member (160) further comprises a guide portion (163) connected to the main body (161); the primary structure (110) comprises a guide hole (118); an axial direction of the guide hole (118) is parallel to the first direction; and the guide portion (163) is inserted into the guide hole (118).

11. The motor (10) according to claim 9 or 10, wherein the motor (10) further comprises a displacement sensor (166); a notch (167) is arranged at a corner of the main body (161); the notch (167) extends through two adjacent inner surfaces (169); and the displacement sensor (166) is disposed in the notch (167).

12. An active suspension (100), comprising the motor (10) according to any one of claims 1 to 11.

13. The active suspension (100) according to claim 12, wherein the active suspension (100) further comprises an elastic member (150); the elastic member (150) can generate elastic deformation along the first direction; the elastic member (150) comprises a first end (151) and a second end (152) arranged oppositely along the first direction; the first end (151) of the elastic member (150) acts on the secondary structure (130); and the second end (152) of the elastic member (150) acts on the primary structure (110).

14. The active suspension (100) according to claim 13, wherein the motor (10) further comprises a support member (160); the support member (160) comprises a main body (161); the main body (161) comprises an inner surface (169); the inner surface (169) faces the primary structure (110) and is connected to the secondary structure (130); the first end (151) of the elastic member (150) abuts against the support member (160), so that the first end (151) of the elastic member (150) acts on the secondary structure (130) through the support member (160).

15. The active suspension (100) according to claim 14, wherein the support member (160) further comprises a support plate (162); the main body (161) further comprises an outer surface (170); the support plate (162) is connected to the outer surface (170) and arranged around the main body (161); and the first end (151) of the elastic member (150) abuts against the support plate (162).

16. The active suspension (100) according to claim 14 or 15, wherein the active suspension (100) further comprises a connecting member (180); the connecting member (180) is fixedly connected to the primary structure (110); the second end (152) of the elastic member (150) abuts against the connecting member (180), so that the second end (152) of the elastic member (150) acts on the primary structure (110) through the connecting member (180).

17. The active suspension (100) according to claim 16, wherein the connecting member (180) comprises an abutment plate (181) and a matching portion (182); the matching portion (182) protrudes from the abutment plate (181) toward the primary structure (110) along the first direction; and the second end (152) of the elastic member (150) abuts against the abutment plate (181).

18. The active suspension (100) according to claim 17, wherein the primary structure (110) further comprises a guide hole (118); the matching portion (182) is inserted into the guide hole (118) along the first direction; and the matching portion (182) is fixedly connected to the guide hole (118).

19. The active suspension (100) according to claim 18, wherein the support member (160) further comprises a guide portion (163); the matching portion (182) comprises a matching hole (183); an axial direction of the matching hole (183) is parallel to an axial direction of the guide hole (118); the guide portion (163) is inserted into the matching hole (183); and the guide portion (163) can move relative to the matching hole (183) along the first direction.

20. A vehicle (200), comprising the motor (10) according to any one of claims 1 to 12; or, the vehicle (200) comprising the active suspension (100) according to any one of claims 13 to 19, a vehicle body (210) and wheels (220); the vehicle body (210) being connected to a top of the primary structure (110); the wheels (220) being connected to a bottom of the secondary structure (130); and the top of the primary structure (110) and the bottom of the secondary structure (130) being respectively arranged at two ends of the motor (10) along the first direction.
